# EUROPEAN PATENT SPECIFICATION

(11) **EP 3 416 842 B1**
(45) Date of publication and mention of the grant of the patent: **29.01.2020**
(21) Application number: 16704863.6
(22) Date of filing: 18.02.2016
(51) Int. Cl.: B60J 7/22

(54) **OPEN ROOF CONSTRUCTION FOR A VEHICLE**
OFFENE DACHKONSTRUKTION FÜR EIN FAHRZEUG
CONSTRUCTION DE TOIT OUVRANT POUR VÉHICULE

(43) Date of publication of application: 26.12.2018
(73) Proprietor: Inalfa Roof Systems Group B.V., 5804 AB Venray (NL)
(72) Inventor: VERVOORT, Stephan, Christiaan, 5831 LD Boxmeer (NL); RIKKERT, Robert, 5672 VS Nuenen (NL)
(74) Representative: De Vries & Metman
(86) International application number: PCT/EP2016/053438
(87) International publication number: WO 2017/140362

(56) References cited:
- EP-A1- 0 903 253
- DE-A1-102004 058 991
- FR-A1- 2 940 934

## Description

The invention relates to an open roof construction for a vehicle, comprising a stationary roof part defining an outer contour, a roof opening in said stationary roof part and a movable panel for opening and closing said roof opening. Such an open roof construction is known e.g. from EP 0 903 253 A1.

A problem commonly encountered with such an open roof construction is the generation of disturbing noises when the vehicle is driving with the movable panel in a position for opening the roof opening. It is believed that one source for such noises are pressure fluctuations that occur over a small boundary layer between the outside air and the interior of the vehicle below the roof opening and thus it already has been attempted to reduce or substantially prevent such pressure fluctuations. One state of the art attempt encompasses the provision, in front of the roof opening, of a so-called wind deflector which generally comprises a plate shaped element which can be moved to a position in which it upwardly projects from the stationary roof part for influencing the flow pattern of the air flowing over the roof opening in such a manner that pressure fluctuations are strongly reduced.

It is an object of the present invention to provide an alternative manner for achieving such a result.

Thus, in accordance with the present invention, the open roof construction further comprises, in front of said roof opening, an air guide cavity which can be closed by a pivotable flap which can pivot around a hinge axis extending in the transverse direction of the vehicle in the vicinity of a forward end of the cavity between an upper position for closing the air guide cavity, in which the flap defines part of the original outer contour of the stationary roof part and a lower position for opening the air guide cavity in which the flap defines a temporary bottom of the cavity and in which a forward edge of the flap substantially joins the outer contour of the stationary roof part, wherein a rearward end of the cavity is defined by a wall extending in the transverse direction of the vehicle and substantially vertically downwards from the outer contour of the stationary roof part.

In its upper position the pivotable flap closes the air guide cavity in such a manner that the flap defines part of the original outer contour of the stationary roof part. This means that in the closed condition of the air guide cavity the outer contour of the vehicle at said part of the stationary roof part is not influenced by the presence of the air guide cavity and remains as originally designed. In the lower position of the pivotable flap there are no parts that protrude from the (original) outer contour of the stationary roof part. However, air now can enter the air guide cavity in such a manner that the air, when arriving at the rear end of said air guide cavity, will cooperate with the wall in a manner for creating a turbulent air flow pattern behind said wall and over the roof opening. Such a turbulent air flow pattern is effective in reducing or even preventing the above mentioned pressure fluctuations, thus reducing or preventing the generation of disturbing noises.

Besides, the open roof construction according to the present invention also offers a better styling of the vehicle.

It is noted that the flap also may assume any desired position between its upper and lower positions (for example depending on the speed with which the vehicle travels) .

In one embodiment the wall is impenetrable for air and as a result the air impinging on the wall will be forced to flow upwardly and over the upper end of the wall. Such a forced change of direction of the air is effective in creating the desired turbulences.

However, in another embodiment the wall is at least partly penetrable for air and defines part of a forward limitation of the roof opening. In this aspect the indication "roof opening" also intends to indicate a part of the interior of the vehicle below the roof opening (wherein said roof opening is defined substantially at and just below the level of the outer contour of the stationary roof part). In such an embodiment at least part of the air entering the air guide cavity and arriving at the wall at the end of said air guide cavity will flow through the wall and over the roof opening (the position of the wall and the location where the air may flow through said wall being chosen in such a manner that the air passing through the wall will flow at a desired level for achieving the desired reduction of pressure fluctuations.

In such an embodiment in which the wall is at least partly penetrable for air, it is required that measures are taken for ensuring the proper amount of turbulence. It is conceivable, for example, that at least part of the wall comprises a mesh material, such as a net material or a grid material.

Further it may be advantageous that the wall further is provided with means designed for creating a venturi effect for the air passing through the wall, such as to increase the speed of the air for even better preventing outside air to enter in the interior of the vehicle through the roof opening while causing disturbing noises.

In another embodiment the flap has a rearward edge provided with sealing means for engaging the stationary roof part (which in such a case may be defined by an uppermost part of the wall too) in the upper position of the flap and for engaging the wall in lower positions of the flap. This may stabilize the position of the flap.

In one embodiment the wall has a side to be engaged by the sealing means of the flap, which side is curved in correspondence with a track followed by said sealing means when the flap moves between its upper and lower positions. This assures that the flap remains in engagement with the wall in all its positions.

In one embodiment the wall may be provided with means designed for increasing the turbulence of the air passing along and/or through the wall. Such means may be designed in many ways, as will be known to persons skilled in the art (for example surface irregularities, but also the previously mentioned mesh material).

It has appeared that good results may be obtained when the flap has a width, as considered between a forward and rearward edge (thus in a longitudinal direction of the vehicle), of at least 150 mm. Such a width especially offers advantages during manufacturing the flap.

Further it may be advantageous when the flap in its lower position extends substantially horizontally. Because the forward edge of the flap in such a position further substantially joins the outer contour of the stationary roof part (which at that location may be defined by an upper part of a wind screen), air flowing along the contour of the stationary roof part (or wind screen) ahead of the air guide cavity will be able to follow the contour of the flap for effectively hitting the wall at the rearward edge of the flap.

In an embodiment of the open roof construction in which the vehicle directly in front of the air guide cavity is provided with a roof part or wind screen defining a first direction including an angle with the longitudinal horizontal direction of the vehicle, the angle between said direction and the flap in its lower position preferably is at most 30° and more preferably is at most 25°. As such it may be ensured that the air originally flowing in said first direction is capable of following the contour of the flap at the interface between the forward edge of the flap and the roof part or wind screen in front of it.

Preferably the dimension of the air guide cavity in the transverse direction of the vehicle is less than the transverse dimension of the local part of the stationary roof part. This results in a design in which the air guide cavity will be obscured from view when the vehicle is looked at from a side.

In one embodiment the flap may be movable by flap driving means of which the activation is controlled by a control in dependency of one or more parameters, such as the speed of the vehicle. It is conceivable, for example, that the generation of disturbing noises through pressure fluctuations as discussed above only will occur above a specific vehicle speed, and in such a case there will be no need for opening the air guide cavity when the vehicle is travelling at a lower speed. Thus, the activation of the flap driving means may depend from the vehicle speed.

In another embodiment, in which the movable panel is movable by panel driving means and wherein the flap is movable by flap driving means, the panel driving means and flap driving means may be synchronised. For example the flap driving means may be activated only when the panel driving means are activated for moving the movable panel to an open position.

In yet another embodiment the wall may be movable in an upward and/or downward direction. Drive means may be provided for causing such a movement that however will be limited. This offers an additional means for influencing the flow pattern of the air.

Finally the air guide cavity may have a forward transverse length which is larger than a rearward transverse length such that a narrowing air guide cavity is created which can increase the velocity of the air flow.

Hereinafter the invention will be elucidated while referring to the drawings, in which:
Figure 1, in a schematic perspective view, illustrates a state of the art embodiment of an open roof construction;
Figure 2, in a schematic perspective view, illustrates an embodiment of the open roof construction in accordance with the present invention;
Figure 3, in a schematic side elevational view, illustrates the embodiment of figure 2 in a closed position of the air guide cavity;
Figure 4 on a larger scale shows a detail of figure 3;
Figure 5, in a schematic side elevational view, illustrates the embodiment of figure 2 in an open position of the air guide cavity, and
Figure 6 on a larger scale shows a detail of figure 5.

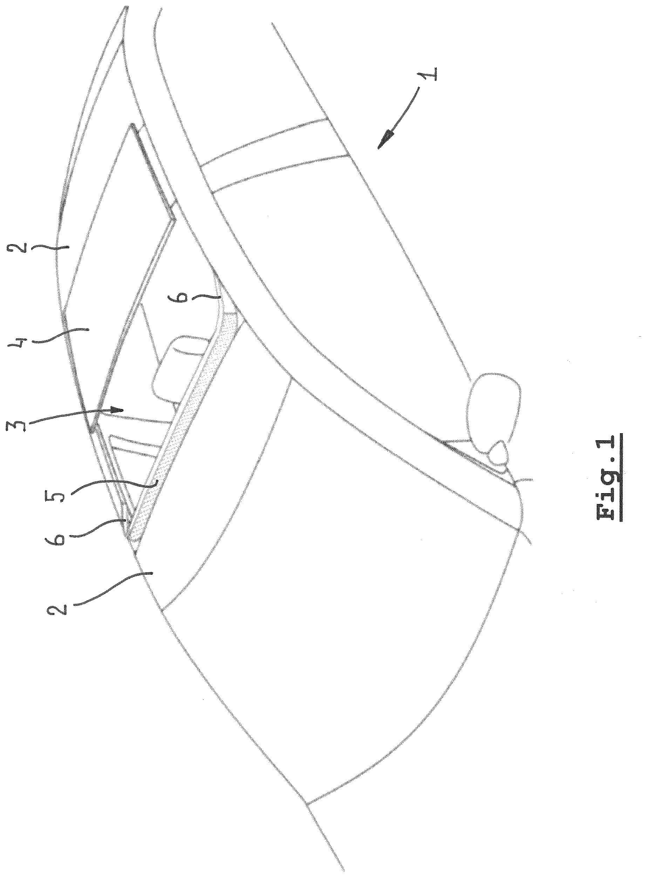

Firstly referring to figure 1, a state of the art open roof construction for a vehicle 1 is illustrated. The vehicle 1 comprises a stationary roof part 2 defining an outer contour, a roof opening 3 in said stationary roof part and a movable panel 4 for opening and closing said roof opening 3. In front of the roof opening 3 a wind deflector 5 is provided which can pivot around two opposite wind deflector arms 6 between a retracted position (not illustrated) inside the(original) contour of the stationary roof part 2 and the illustrated active position in which it protrudes above the stationary roof part 2.

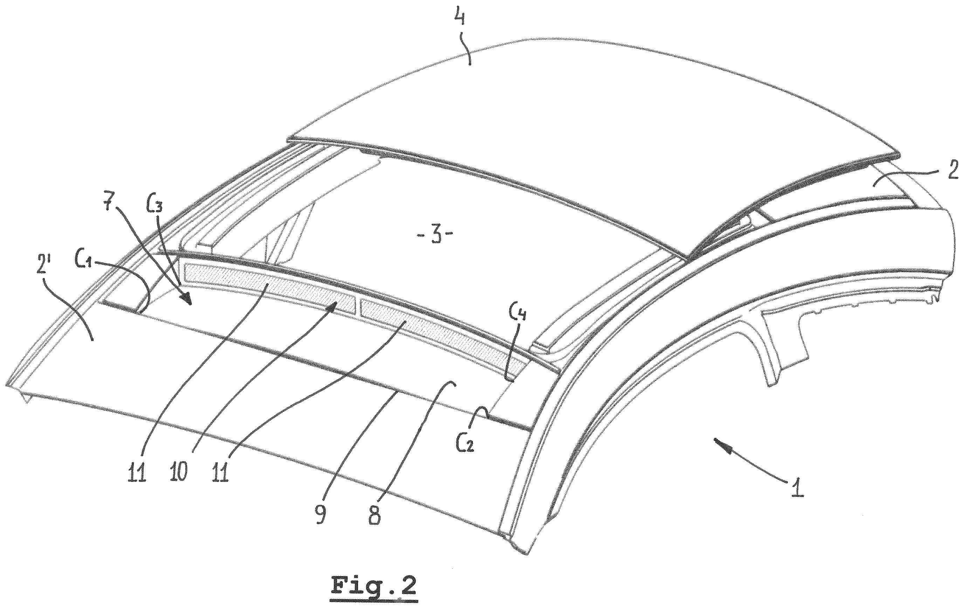

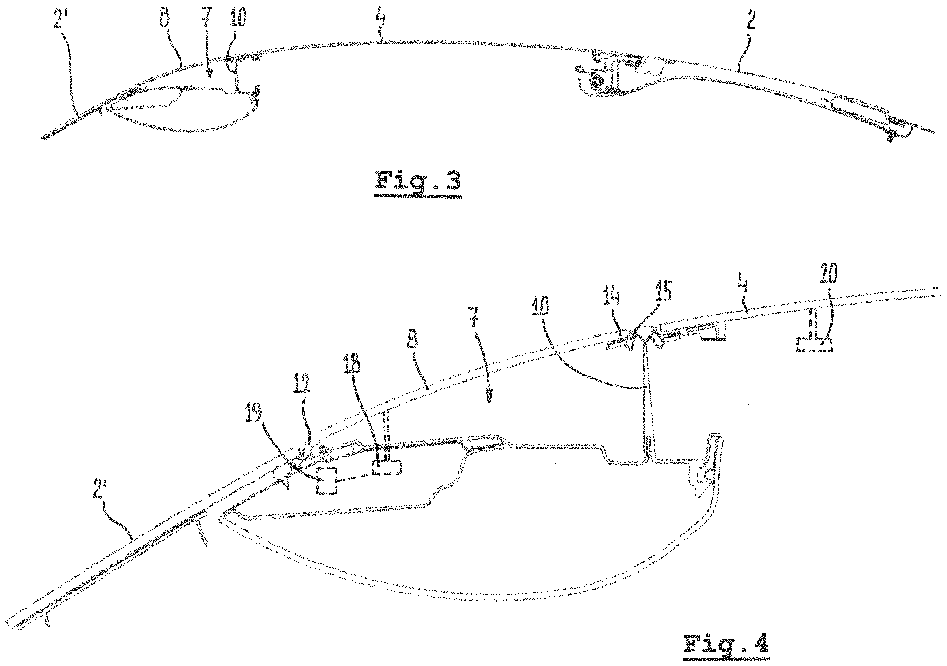

Now referring to figures 2-6 an embodiment of the open roof construction in accordance with the present invention is illustrated in two different positions (in which, too, the movable panel 4 is illustrated in two different positions). In this embodiment the vehicle 1 too comprises a stationary roof part 2 (of which a forward part 2' may be defined by a wind screen). In front of the roof opening 3 an air guide cavity 7 is defined which can be closed (figures 3 and 4) by a pivotable flap 8 which can pivot around a hinge axis (as schematically indicated by reference number 9 in figure 2; its precise location may slightly differ from the illustrated position, however) extending in the transverse direction of the vehicle 1 in the vicinity of a forward end of the cavity 7.

A rearward end of the cavity 7 is defined by a wall 10 extending also in the transverse direction of the vehicle 1 and substantially vertically downwards from the (original) outer contour of the stationary roof part 2. An upper end of the wall 10 may define part of said outer contour. In the illustrated embodiment the wall 10 is at least partly penetrable for air (for example because at least parts of it comprise a mesh material 11, such as a net material or a grid material) and defines part of a forward limitation of the roof opening 3 (or of the interior of the vehicle just below the real roof opening).

The flap 8 may assume an upper position (figures 3 and 4) for closing the air guide cavity 7, in which the flap 8 defines part of the original contour of the stationary roof part 2, 2' (and in which position the movable panel 4 generally, but not exclusively, assumes its position for closing the roof opening 3). In this position of the flap 8 air arriving over the wind screen 2' will follow the outer contour of the roof as defined too by the flap 8 in its upper position.

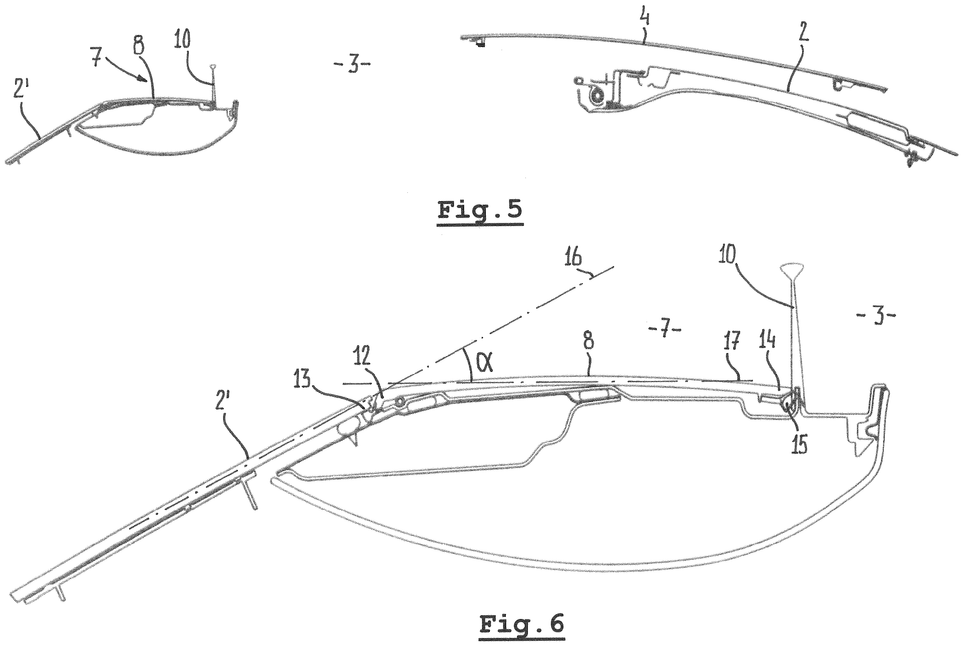

The flap 8 may pivot to a lower position (figures 5 and 6) for opening the air guide cavity 7 in which the flap 8 defines a temporary bottom of the cavity and in which a forward edge 12 (see figure 6) of the flap 8 still substantially joins the outer contour of the stationary roof part 2 (as defined there, in this embodiment, by the uppermost edge 13 of the wind screen 2'). In this position of the flap 8 (in which further the movable panel 4 generally, but not exclusively, assumes its position for opening the roof opening 3) air arriving over the wind screen 2' may enter the air guide cavity 7, impinge on the wall 10 and at least partly penetrate said wall (for example through the mesh material parts 11) for arriving at the roof opening 3. The design of the wall 10 will cause the generation of a turbulent air flow behind said wall 10 which may reduce or prevent pressure fluctuations at the roof opening 3.

The flap 8 also may assume any intermediate position between its upper and lower positions (for example depending on the speed with which the vehicle travels).

For promoting the turbulence the wall 10 may be provided with means designed for increasing the turbulence of the air (these means for example also may be defined by the mesh material 11). Such means (or other means) also may be used for creating a venturi effect for the air passing through the wall. Further, the design may be such that the air guide cavity 8 has a forward transverse length (between corners C1 and C2) which is larger than a rearward transverse length (between corners C3 and C4),see figure 2, such as to create an increase of the velocity of the air flow.

As demonstrated best in figure 6, the flap 8 has a rearward edge 14 engaging the wall 10. Specifically, in this embodiment, the flap 8 has a rearward edge 14 provided with sealing means 15 which are meant both for engaging the stationary roof part 2 (as defined here by the uppermost part of the wall 10 as illustrated in figure 4) in the upper position of the flap 8 and for engaging the wall 10 in lower positions of the flap 8. For assuring a good contact between the flap 8 and the wall 10 in all positions of the flap, the wall 10 may have a side to be engaged by the sealing means 15 of the flap, which side is curved in correspondence with a track followed by said sealing means when the flap moves between its upper and lower positions.

The flap 8 preferably (in view of ease of manufacture) has a width, as considered between its forward edge 12 and its rearward edge 14, of at least 150 mm.

As illustrated in figure 6, the flap 8 in its lower position extends substantially horizontally. When the vehicle 1 directly in front of the air guide cavity 7 is provided with a wind screen 2' defining a first direction as indicated by a first broken line 16 (and generally including an angle with the longitudinal horizontal direction of the vehicle 1 because the wind screen 2' will have an inclined position), the angle α between said direction and the direction of the flap 8 in its lower position (as indicated by a second broken line 17) is at most 30° and preferably at most 25°. As such it may be assured that air arriving over the wind screen 2' is capable of following the contour of the flap 8 directly from the forward edge 12 thereof towards the wall 10.

Whereas the illustrated embodiment features a wall 10 which at least partly is penetrable for air (such that all air or at least part thereof may pass through the wall), in an alternative embodiment the wall 10 is impenetrable for air which then will flow entirely over the top of the wall 10. In such an embodiment the wall 10 not necessarily defines a part of a forward limitation of the roof opening (or interior of the vehicle just below the roof opening). It even is conceivable that a wall 10 is provided which may assume a configuration in which it is (at least partly) penetrable for air and a position in which it is not.

In an embodiment not illustrated the wall may be movable upwardly/downwardly in a limited sense, for example by corresponding drive means.

As illustrated best in figure 2, the dimension of the air guide cavity 7 in the transverse direction of the vehicle 1 is less than the transverse dimension of the local part of the stationary roof part 2. This yields an attractive appearance when the vehicle is looked at from a side.

The flap may be movable by flap driving means 18 (only indicated schematically in figure 4) of which the activation may be controlled by a control 19 in dependency of one or more parameters, such as the speed of the vehicle. Further, the movable panel 4 may be movable by panel driving means 20 (only indicated schematically in figure 4) whereas the panel driving means 20 and flap driving means 18 may be synchronised, for example such that opening the movable panel 20 causes the flap 8 to move to its lower position (possibly in combination with a dependency from an above parameter, for example only when the vehicle 1 travels with a speed above a defined speed limit). The above mentioned upward/downward movement of the wall (if provided) also may be controlled in dependency of such parameters.

The invention is not limited to the embodiments described before which may be varied widely within the scope of the invention as defined by the appending claims.

## Claims

1. Open roof construction for a vehicle (1), comprising a stationary roof part (2,2') defining an outer contour, a roof opening (3) in said stationary roof part and a movable panel (4) for opening and closing said roof opening, wherein it further comprises, in front of said roof opening (3), an air guide cavity (7) which can be closed by a pivotable flap (8), **characterized in that** said pivotable flap (8) can pivot around a hinge axis (9) extending in the transverse direction of the vehicle in the vicinity of a forward end of the cavity (7) between an upper position for closing the air guide cavity, in which the flap defines part of the original outer contour of the stationary roof part (2,2') and a lower position for opening the air guide cavity in which the flap defines a temporary bottom of the cavity and in which a forward edge (12) of the flap (8) substantially joins the outer contour of the stationary roof part (2,2'), wherein a rearward end of the cavity is defined by a wall (10) extending in the transverse direction of the vehicle and substantially vertically downwards from the outer contour of the stationary roof part (2).

2. Open roof construction according to claim 1, wherein the wall (10) is impenetrable for air.

3. Open roof construction according to claim 1, wherein the wall (10) is at least partly penetrable for air and defines part of a forward limitation of the roof opening (3) .

4. Open roof construction according to claim 3, wherein at least part of the wall (10) comprises a mesh material (11), such as a net material or a grid material.

5. Open roof construction according to claim 3 or 4, wherein the wall (10) further is provided with means designed for creating a venturi effect for the air passing through the wall.

6. Open roof construction according to any of the previous claims, wherein the flap (8) has a rearward edge (14) provided with sealing means (15) for engaging the stationary roof part (2) in the upper position of the flap and for engaging the wall (10) in lower positions of the flap.

7. Open roof construction according to claim 6, wherein the wall (10) has a side to be engaged by the sealing means (15) of the flap (8), which side is curved in correspondence with a track followed by said sealing means when the flap moves between its upper and lower positions.

8. Open roof construction according to any of the previous claims, wherein the wall (10) is provided with means designed for increasing the turbulence of the air passing along and/or through the wall.

9. Open roof construction according to any of the previous claims, wherein the flap (8) in its lower position extends substantially horizontally.

10. Open roof construction according to any of the previous claims, wherein the vehicle (1) directly in front of the air guide cavity (7) is provided with a roof part or wind screen (2') defining a first direction (16) including an angle with the longitudinal horizontal direction of the vehicle and wherein the angle (α) between said direction (16) and the flap (8) in its lower position is at most 30°.

11. Open roof construction according to claim 10, wherein the angle (α) between said direction (16) and the flap (8) in its lower position is at most 25°.

12. Open roof construction according to any of the previous claims, wherein the dimension of the air guide cavity (7) in the transverse direction of the vehicle (1) is less than the transverse dimension of the local part of the stationary roof part (2,2').

13. Open roof construction according to any of the previous claims, wherein the flap (8) is movable by flap driving means (18) of which the activation is controlled by a control (19) in dependency of one or more parameters, such as the speed of the vehicle.

14. Open roof construction according to any of the previous claims, wherein the movable panel (4) is movable by panel driving means (20) and wherein the flap (8) is movable by flap driving means (18) and wherein the panel driving means (20) and flap driving means (18) are synchronised.

15. Open roof construction according to any of the previous claims, wherein the wall (10) is movable in an upward and/or downward direction.

16. Open roof construction according to any of the previous claims, wherein the air guide cavity (7) has a forward transverse length (C₁-C₂) which is larger than a rearward transverse length (C₃-C₄).

## Patentansprüche

1. Offendachkonstruktion für ein Fahrzeug (1) mit einem stationären Dachteil (2, 2'), das eine Außenkontur definiert, einer Dachöffnung (3) in dem stationären Dachteil und einer beweglichen Platte (4) zum Öffnen und Schließen der Dachöffnung, ferner mit:
einem vor der Dachöffnung (3) vorgesehenen Luftführungshohlraum (7), der durch eine schwenkbare Klappe (8) verschließbar ist,
**dadurch gekennzeichnet, dass**
die schwenkbare Klappe (8) um eine sich in der Fahrzeugquerrichtung erstreckende Gelenkachse (9) in der Nähe eines vorderen Endes des Hohlraums (7) schwenkbar ist zwischen einer oberen Position zum Schließen des Luftführungshohlraums, in der die Klappe einen Teil der ursprünglichen Außenkontur des stationären Dachteils (2, 2') definiert, und einer unteren Position zum Öffnen des Luftführungshohlraums, in der die Klappe einen vorübergehenden Boden des Hohlraums definiert und in dem eine Vorderkante (12) der Klappe (8) sich im Wesentlichen an die Außenkontur des stationären Dachteils (2, 2') anschließt, wobei ein hinteres Ende des Hohlraums durch eine Wand (10) definiert ist, die sich in der Fahrzeugquerrichtung und im Wesentlichen senkrecht von der Außenkontur des stationären Dachteils (2) nach unten erstreckt.

2. Offendachkonstruktion nach Anspruch 1, wobei die Wand (10) luftundurchlässig ist.

3. Offendachkonstruktion nach Anspruch 1, wobei die Wand (10) zumindest teilweise luftdurchlässig ist und einen Teil einer vorderen Begrenzung der Dachöffnung (3) definiert.

4. Offendachkonstruktion nach Anspruch 3, wobei mindestens ein Teil der Wand (10) ein Maschenmaterial (11) aufweist, beispielsweise ein Netzmaterial oder ein Gittermaterial.

5. Offendachkonstruktion nach Anspruch 3 oder 4, wobei die Wand (10) ferner eine Einrichtung aufweist, die dazu ausgebildet ist, einen Venturi-Effekt für die durch die Wand strömende Luft zu erzeugen.

6. Offendachkonstruktion nach einem der vorangehenden Ansprüche, wobei die Klappe (8) einen hinteren Rand (14) aufweist, der eine Dichtungseinrichtung (15) aufweist, die dazu geeignet ist, in der oberen Position der Klappe mit dem stationären Dachteil (2) in Eingriff zu kommen und in der unteren Position der Klappe mit der Wand (10) in Eingriff zu kommen.

7. Offendachkonstruktion nach Anspruch 6, wobei die Wand (10) eine Seite aufweist, die dafür vorgesehen ist, mit der Dichtungseinrichtung (15) der Klappe (8) in Eingriff zu kommen, wobei die Seite entsprechend einer Bahn gekrümmt ist, der die Dichtungseinrichtung folgt, wenn sich die Klappe zwischen ihrer oberen und ihrer unteren Position bewegt.

8. Offendachkonstruktion nach einem der vorangehenden Ansprüche, wobei die Wand (10) eine Einrichtung aufweist, die dazu ausgebildet ist, die Turbulenz der entlang der und/oder durch die Wand strömenden Luft zu erhöhen.

9. Offendachkonstruktion nach einem der vorangehenden Ansprüche, wobei sich die Klappe (8) in ihrer unteren Position im Wesentlichen horizontal erstreckt.

10. Offendachkonstruktion nach einem der vorangehenden Ansprüche, wobei das Fahrzeug (1) direkt vor dem Luftführungshohlraum (7) ein Dachteil oder eine Windschutzscheibe (2') aufweist, das/die eine erste Richtung (16) definiert, die einen Winkel mit der Längshorizontalenrichtung des Fahrzeugs einschließt, und wobei der Winkel (α) zwischen der Richtung (16) und der Klappe (8) in ihrer unteren Position höchstens 30° beträgt.

11. Offendachkonstruktion nach Anspruch 10, wobei der Winkel (α) zwischen der Richtung (16) und der Klappe (8) in ihrer unteren Position höchstens 25° beträgt.

12. Offendachkonstruktion nach einem der vorangehenden Ansprüche, wobei die Abmessung des Luftführungshohlraums (7) in der Fahrzeugquerrichtung (1) kleiner ist als die Querabmessung des lokalen Teils des stationären Dachteils (2, 2').

13. Offendachkonstruktion nach einem der vorangehenden Ansprüche, wobei die Klappe (8) durch eine Klappenantriebseinrichtung (18) bewegbar ist, deren Aktivierung durch eine Steuerung (19) in Abhängigkeit von einem oder mehreren Parametern gesteuert wird, wie z.B. von der Geschwindigkeit des Fahrzeugs.

14. Offendachkonstruktion nach einem der vorangehenden Ansprüche, wobei die bewegliche Platte (4) durch eine Plattenantriebseinrichtung (20) bewegbar ist, und wobei die Klappe (8) durch eine Klappenantriebseinrichtung (18) bewegbar ist, und wobei die Plattenantriebseinrichtung (20) und die Klappenantriebseinrichtung (18) synchronisiert sind.

15. Offendachkonstruktion nach einem der vorangehenden Ansprüche, wobei die Wand (10) in eine Aufwärts- und/oder eine Abwärtsrichtung bewegbar ist.

16. Offendachkonstruktion nach einem der vorangehenden Ansprüche, wobei der Luftführungshohlraum (7) eine vordere Querlänge (C₁-C₂) aufweist, die größer ist als eine hintere Querlänge (C₃-C₄).

## Revendications

1. Construction de toit ouvrant pour un véhicule (1), comprenant une partie de toit fixe (2, 2') définissant un contour externe, une ouverture de toit (3) dans ladite partie de toit fixe et un panneau mobile (4) pour ouvrir et fermer ladite ouverture de toit, dans laquelle elle comprend en outre, à l'avant de ladite ouverture de toit (3), une cavité guide d'air (7) qui peut être fermée par un volet pivotable (8), **caractérisée en ce que** ledit volet pivotable (8) peut pivoter autour d'un axe d'articulation (9) s'étendant dans la direction transversale du véhicule au voisinage d'une extrémité avant de la cavité (7) entre une position supérieure pour fermer la cavité guide d'air, dans laquelle le volet définit une partie du contour externe d'origine de la partie de toit fixe (2, 2') et une position inférieure pour ouvrir la cavité guide d'air dans laquelle le volet définit un fond temporaire de la cavité et dans laquelle un bord avant (12) du volet (8) rejoint sensiblement le contour externe de la partie de toit fixe (2, 2'), dans laquelle une extrémité arrière de la cavité est définie par une paroi (10) s'étendant dans la direction transversale du véhicule et sensiblement verticalement vers le bas à partir du contour externe de la partie de toit fixe (2).

2. Construction de toit ouvrant selon la revendication 1, dans laquelle la paroi (10) est impénétrable à l'air.

3. Construction de toit ouvrant selon la revendication 1, dans laquelle la paroi (10) est au moins partiellement pénétrable à l'air et définit une partie d'une limitation avant de l'ouverture de toit (3).

4. Construction de toit ouvrant selon la revendication 3, dans laquelle au moins une partie de la paroi (10) comprend un matériau en treillis (11), tel qu'un matériau en filet ou un matériau en grille.

5. Construction de toit ouvrant selon la revendication 3 ou 4, dans laquelle la paroi (10) est en outre munie de moyens conçus pour créer un effet venturi pour l'air traversant la paroi.

6. Construction de toit ouvrant selon l'une quelconque des revendications précédentes, dans laquelle le volet (8) possède un bord arrière (14) muni de moyens d'étanchéité (15) pour venir en prise avec la partie de toit fixe (2) dans la position supérieure du volet et pour venir en prise avec la paroi (10) dans les positions inférieures du volet.

7. Construction de toit ouvrant selon la revendication 6, dans laquelle la paroi (10) possède un côté à mettre en prise par les moyens d'étanchéité (15) du volet (8), lequel côté est incurvé en correspondance avec une piste suivie par lesdits moyens d'étanchéité lorsque le volet se déplace entre ses positions supérieure et inférieure.

8. Construction de toit ouvrant selon l'une quelconque des revendications précédentes, dans laquelle la paroi (10) est munie de moyens conçus pour augmenter la turbulence de l'air passant le long et/ou traversant la paroi.

9. Construction de toit ouvrant selon l'une quelconque des revendications précédentes, dans laquelle le volet (8) dans sa position inférieure s'étend sensiblement horizontalement.

10. Construction de toit ouvrant selon l'une quelconque des revendications précédentes, dans laquelle le véhicule (1) directement à l'avant de la cavité guide d'air (7) est muni d'une partie de toit ou d'un pare-brise (2') définissant une première direction (16) incluant un angle avec la direction horizontale longitudinale du véhicule et dans laquelle l'angle (α) entre ladite direction (16) et le volet (8) dans sa position inférieure est au plus de 30°.

11. Construction de toit ouvrant selon la revendication 10, dans laquelle l'angle (α) entre ladite direction (16) et le volet (8) dans sa position inférieure est au plus de 25°.

12. Construction de toit ouvrant selon l'une quelconque des revendications précédentes, dans laquelle la dimension de la cavité guide d'air (7) dans la direction transversale du véhicule (1) est inférieure à la dimension transversale de la partie locale de la partie de toit fixe (2, 2').

13. Construction de toit ouvrant selon l'une quelconque des revendications précédentes, dans laquelle le volet (8) est apte à être déplacé par des moyens d'entraînement de volet (18) dont l'activation est commandée par une commande (19) en dépendance d'un ou de plusieurs paramètres, tels que la vitesse du véhicule.

14. Construction de toit ouvrant selon l'une quelconque des revendications précédentes, dans laquelle le panneau mobile (4) est apte à être déplacé par des moyens d'entraînement de panneau (20) et dans laquelle le volet (8) est apte à être déplacé par des moyens d'entraînement de volet (18) et dans laquelle les moyens d'entraînement de panneau (20) et les moyens d'entraînement de volet (18) sont synchronisés.

15. Construction de toit ouvrant selon l'une quelconque des revendications précédentes, dans laquelle la paroi (10) est apte à être déplacée dans une direction vers le haut et/ou vers le bas.

16. Construction de toit ouvrant selon l'une quelconque des revendications précédentes, dans laquelle la cavité guide d'air (7) possède une longueur transversale avant (C₁-C₂) qui est supérieure à une longueur transversale arrière (C₃-C₄).
